# FASCICULE DE BREVET EUROPEEN

(11) **EP 0 461 969 B1**
(45) Date de publication et mention de la délivrance du brevet: **27.12.1995**
(21) Numéro de dépôt: 91401496.4
(22) Date de dépôt: 07.06.1991
(51) Int. Cl.: G01S 1/68, G01S 5/04

(54) **Système automatique de localisation et d'identification de véhicules en détresse**
Automatisches Ortungs- und Identifizierungssystem für Fahrzeuge in Not
Automatic location and identification system for vehicles in distress

(30) Priorité: 13.06.1990 FR 9007324
(43) Date de publication de la demande: 18.12.1991
(73) Titulaire: THOMSON-CSF, 75008 Paris (FR)
(72) Inventeur: Drouault, Didier, F-92045 Paris la Défense (FR); Potage, Jean, F-92045 Paris la Défense (FR)
(74) Mandataire: Lincot, Georges

(56) Documents cités:
- DE-A- 2 641 282
- DE-A- 2 757 294
- DE-A- 3 830 301
- FR-A- 2 203 118
- GB-A- 2 207 787
- US-A- 4 596 988

## Description

La présente invention concerne un système automatique de localisation et d'identification de véhicules en détresse.

Le temps d'acheminement des secours sur les lieux des accidents de la circulation routière dépend de la rapidité avec laquelle ceux-ci sont prévenus et de la distance effective qui existe entre le lieu du sinistre et le poste de secours le plus proche.

Ainsi l'efficacité des sauvetages est directement liée à l'infrastructure, aux moyens humains et matériels à la disposition des sauveteurs pour couvrir un territoire, et la période qui s'écoule entre le sinistre et l'alerte est principalement liée au lieu de l'accident, à sa nature et aux témoins possibles qui peuvent prendre en charge cette alerte.

Pour résoudre ce problème, un système automatique de localisation de véhicules en détresse dans un réseau de radiogoniomètre est par exemple connu de la demande de brevet DE 2 641 282, cependant l'imprécision des moyens de calculs de ces radiogoniomètres ne permet pas le diligentement des secours sur les lieux du véhicule en détresse avec le maximum d'efficacité.

Pour minimiser au maximum le temps qui s'écoule entre l'accident et l'alerte, le but de l'invention est de permettre la détection automatique d'accidents graves pouvant se produire dans le domaine notamment de la circulation routière sur un territoire déterminé.

A cet effet, l'invention a pour objet, un système automatique de localisation et d'identification de véhicules en détresse tel que décrit dans la revendication 1.

D'autres caractéristiques et avantages de l'invention apparaîtront ci-après dans la description qui suit faite en regard des dessins annexés qui représentent :
- La figure 1, un système de localisation et d'identification de véhicules en détresse selon l'invention.
- La figure 2 un mode de réalisation d'un dispositif électronique disposé à l'intérieur de chaque balise pour permettre l'émission de signaux de détresse.
- La figure 3 une suite de types de messages pouvant être transmis par les balises.
- La figure 4 un schéma d'adressage de descripteurs de zones.
- La figure 5 un organigramme pour illustrer un mode de programmation de la balise.

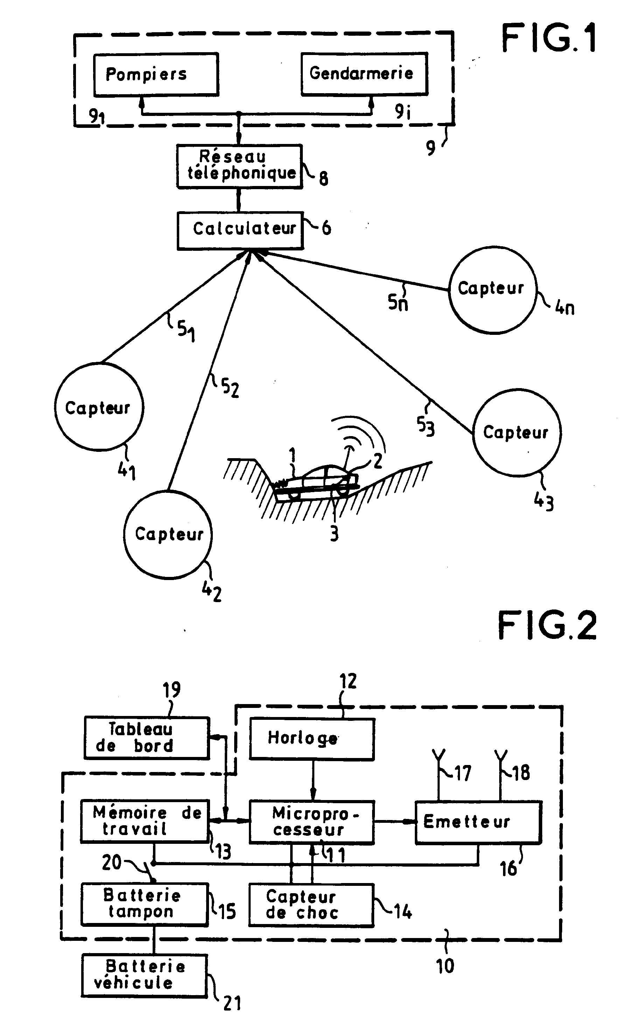

Selon l'invention chaque véhicule portant la référence 1 sur la figure 1 est équipé d'une balise de détresse 2. Il possède par ailleurs des capteurs 3 lui permettant d'établir un contact électrique ou mécanique à la suite d'un choc important subi par le véhicule et pour lequel il est supposé que les occupants du véhicule sont blessés. Le contact établi par chaque capteur 3 permet à la balise de détresse 2 de se mettre en émission sur une fréquence radio spécifiée. Une infrastructure au sol composée sur la figure 1 de radiogoniomètres référencés de 4₁ à 4ₙ permet de recevoir et de détecter cette émission radioélectrique. Chaque capteur 4₁ à 4ₙ possède un goniomètre couplé à un calculateur spécifique, non représenté, qui permet de reconnaître de façon connue à partir d'une cartographie le relèvement du signal reçu.

Une liaison informatique 5₁ ... 5ₙ relie tous les capteurs 4₁ à 4ₙ à une unité de traitement 6 qui reçoit toutes les informations de relèvement et qui en déduit les coordonnées exactes du point d'émission. Une telle liaison peut par exemple être constituée à la manière de celle connue et décrite dans le rapport 668-2 de la commission d'Etude n° 1 CCIR de l'UIT d'octobre 89 ayant pour titre "Contrôle automatique et mesure du spectre des fréquences radioélectriques ". Le calculateur 6 placé dans un centre d'écoute et d'alerte non représenté permet de générer un appel sur le réseau téléphonique commuté vers un centre de secours 9 qui est le plus proche du lieu de l'accident et de fournir les coordonnées géographiques calculées de la position du véhicule accidenté.

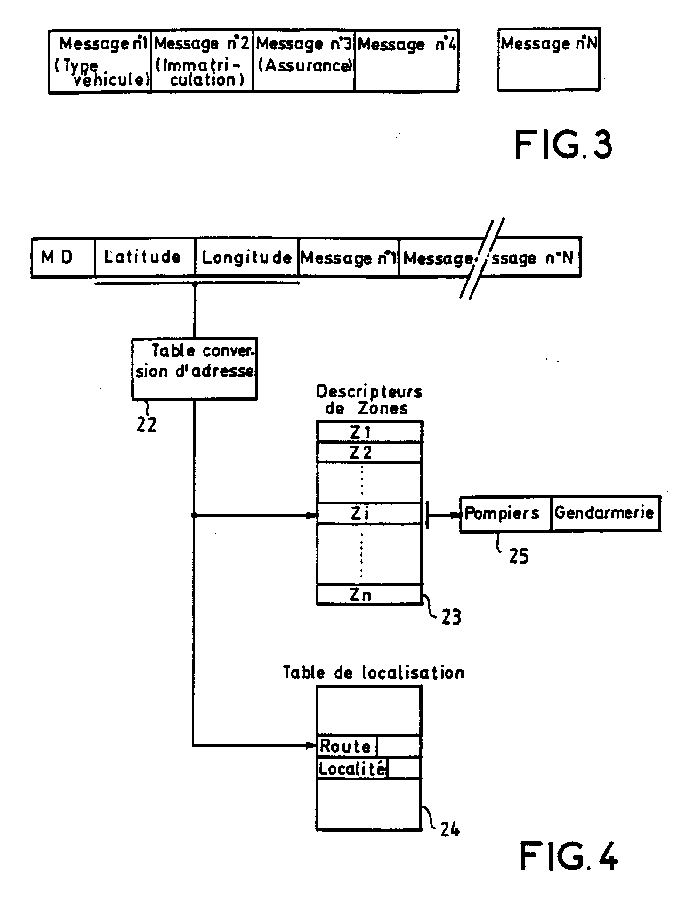

Le dispositif électronique équipant la balise de détresse 2 est représenté schématiquement sur la figure 2 à l'intérieur d'une ligne fermée en pointillés 10. Elle comprend reliés à un microprocesseur 11, une horloge 12, une mémoire 13, un capteur de chocs 14, une batterie tampon 15 et un émetteur radioélectrique 16 couplés à au moins deux antennes 17 et 18 situées au dessus et au dessous du véhicule 1 pour permettre une continuité des émissions de la balise même en cas de renversement ou de retournement du véhicule. Le microprocesseur 11 est relié au tableau de bord 19 du véhicule. Un interrupteur 20 est placé sur la balise pour permettre la coupure d'alimentation du dispositif de la figure 2 par la batterie tampon 15. La batterie tampon 15 est d'autre part alimentée par la batterie du véhicule 21. Suivant un premier mode de réalisation de l'invention, l'émetteur 16 peut émettre sur deux fréquences différentes qui peuvent avoir chacune une signification particulière pour permettre de déplacer sur le site du véhicule accidenté les secours appropriés, tels que les pompiers, les personnels des services hospitaliers et les équipes de dépannage mécanique pour l'enlèvement du véhicule. Les types de messages qui sont transmis sont des messages qui renseignent sur le type de véhicule accidenté, sur son immatriculation, sur son assurance, sur éventuellement le garage du concessionnaire, ... Eventuellement il peut être prévu un message de test pour permettre le test du bon fonctionnement de la balise, sans pour autant déclencher les secours. Les fréquences et les messages transmis sur ces canaux sont détectés par les goniomètres 4₁ à 4ₙ et les angles d'arrivée de ces fréquences sont transmis avec les messages correspondants à destination du calculateur 6 qui effectue la localisation du véhicule 1. Cette localisation est déterminée de façon connue en latitude et longitude par rapport au méridien de Greenwich, par exemple, qui permet de la manière représentée à la figure 4 de définir à l'aide d'une table de conversion 22 la zone géographique dans laquelle se situe le véhicule accidenté. Pour se faire la table de conversion calcule une adresse de zone dans une table de descripteur de zones mémorisée dans une mémoire du calculateur 6 et une adresse pour adresser une table de localisation. La zone zᵢ pointée par la table de conversion d'adresses 22 contient de la façon représentée en 25 sur la figure 4 l'ensemble des informations nécessaires au diligencement des moyens de secours sur le lieu de l'accident. Ces informations peuvent être constituées comme représentées à la figure 4, par les numéros de téléphone des services des pompiers ou de gendarmeries les plus proches du lieu auquel a eu lieu l'accident. La table de conversion d'adresses 22 pointe également dans la table de localisation 24 la localité du lieu le plus proche de l'accident, la route sur laquelle il s'est produit. Le calculateur 6 peut ainsi en déduire le nombre de kilomètres qui sépare le lieu de l'accident de la localité.

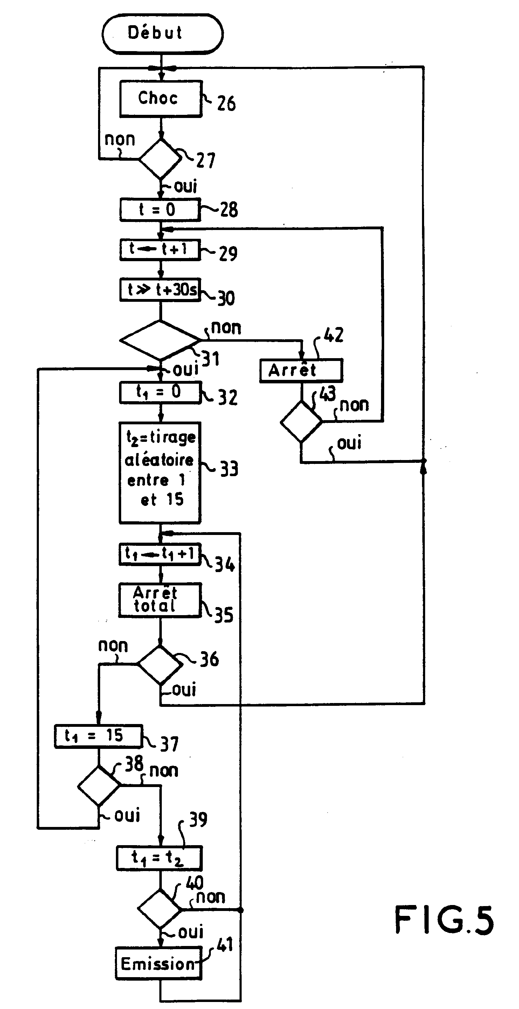

Le fonctionnement d'une balise est illustré par les étapes 26 à 43 de l'organigramme de la figure 5. Sur cet organigramme lorsqu'aux étapes 26 et 27 un choc est détecté, une temporisation de durée déterminée 30 secondes par exemple, et illustrée par les étapes 28 à 31 et 42, 43 est déclenchée par les capteurs de chocs 14 de la balise de façon à permettre aux occupants du véhicule d'agir sur le tableau de bord 19 pour éventuellement interdire les émissions des messages s'il est constaté que le choc qui a provoqué le déclenchement de la balise ne justifie pas l'envoi de signaux de détresse. Si à l'étape 42 l'arrêt du fonctionnement de la balise n'est pas réalisé au bout des 30 secondes écoulées, le microprocesseur 11 exécute les étapes 32 à 41 qui permettent d'envoyer des messages régulièrement à l'intérieur de fenêtres à durée déterminée t₀ de 15 secondes par exemple à intervalle d'émission de durée t₁ de 1 seconde par exemple tirée aléatoirement à l'intérieur de chaque fenêtre de durée t₀, de façon à éviter que deux véhicules en collision et disposant chacun d'une balise ne puisse avoir un cycle d'émission simultané. A l'étape 35 il est possible d'arrêter le fonctionnement de la balise en coupant l'alimentation de celle-ci par action sur l'interrupteur 20. Si cette action n'est pas réalisée à l'étape 35 le processus d'émission est continué par l'exécution des étapes 37 à 41.

Naturellement, selon l'invention il est aussi possible d'équiper des véhicules de secours de goniomètres adaptés à la gamme des fréquences des balises de détresse. L'intérêt de cet équipement est bien sûr de permettre d'indiquer au conducteur du véhicule de secours la direction générale à suivre pour arriver sur le lieu de l'accident. Cette solution présente un intérêt notamment dans le cas d'un véhicule accidenté de nuit en zone rurale par exemple.

## Revendications

1. Système automatique de localisation et d'identification de véhicules en détresse comprenant d'une part un réseau de radiogonomiètres (4₁...4ₙ) disposés en des endroits bien déterminés de zones de territoire, d'autre part un ensemble de balises de détresse radio (2) disposées à l'intérieur de véhicules (1) se déplaçant dans les zones du territoire, et un calculateur (6) couplé aux radiogoniomètres du réseau par des liaisons informatiques pour d'une part, déterminer, à partir des informations de relèvement des ondes radio fournies par les radiogoniomètres, la position sur le territoire des balises émettrices, caractérisé en ce qu'il comprend des moyens de liaisons (8) couplés au calculateur (6) pour signaler aux services de secours les plus proches du lieu des balises émettrices les informations nécessaires au diligentement des secours, et en ce que le calculateur (6) comporte une table de conversion (22) pour déterminer à partir des coordonnées géographiques de localisation d'une balise, la zone géographique dans laquelle se situe la balise, identifier l'adresse et les numéros téléphoniques des moyens de secours les plus proches, ainsi que la localité la plus proche et la route sur laquelle le véhicule en détresse est situé.

2. Système selon la revendication 1, caractérisé en ce que les radiogoniomètres (4₁...4ₙ) détectent les messages transmis par les balises et les angles d'arrivée des ondes transmettant ces messages pour les retransmettre au calculateur (6).

3. Système selon l'une quelconque des revendications 1 à 2 caractérisé en ce que chaque balise radio (2) de détresse comprend au moins un capteur de choc (14) couplé à un émetteur radio (16).

4. Système selon la revendication 3 caractérisé en ce que l'émetteur (16) émet sur au moins deux fréquences différentes.

5. Système selon l'une quelconque des revendications 3 et 4 caractérisé en ce que l'émetteur (16) est commandé par un microprocesseur (11) couplé aux capteurs de choc (14).

6. Système selon la revendication 5 caractérisé en ce que l'émetteur (16) émet sous la commande du microprocesseur (11) des messages permettant d'identifier le véhicule accidenté et éventuellement la nature de l'accident.

7. Système selon la revendication 6 caractérisé en ce que l'émetteur et/ou le microprocesseur sont alimentés par une batterie tampon (15) branchée sur la batterie du véhicule (21).

8. Système selon la revendication 7 caractérisé en ce que le microprocesseur (11) est relié au tableau de bord du véhicule pour permettre l'envoi par un déclenchement de nouveaux messages appropriés à la nature des secours sollicités.

9. Système selon la revendication 8, caractérisé en ce que la balise comporte un interrupteur pour couper l'alimentation électrique de l'émetteur (1) et/ou des microprocesseurs (11).

10. Système selon l'une quelconque des revendications 5 à 9 caractérisé en ce que le microprocesseur (11) est programmé pour déclencher l'émission de fréquences et/ou de messages de détresse par l'émetteur (16) lorsqu'un choc est détecté par le capteur de choc (14).

11. Système selon la revendication 10 caractérisé en ce que la programmation du microprocesseur est réalisée de manière à permettre lorsqu'un choc intervient de différer l'envoi des messages de détresse pendant une durée déterminée pour permettre aux passagers du véhicule d'interdire pendant cette durée l'envoi des messages si cet envoi n'est pas justifié.

12. Système selon la revendication 11 caractérisé en ce que le microprocesseur (11) est programmé pour permettre l'envoi régulier de messages à l'issue de la durée déterminée si cet envoi n'a pas été interdit par un passager du véhicule.

13. Système selon la revendication 12 caractérisé en ce que l'émission des messages a lieu par intervalle d'émission tirée aléatoirement à l'intérieur de fenêtres de temps de durée déterminée.

14. Système selon les revendications 11, 12 et 13 caractérisé en ce que l'interdiction d'émettre a lieu par action sur le tableau de bord ou sur l'interrupteur d'alimentation de la balise.

15. Système selon l'une quelconque des revendications 1 à 14, caractérisé en ce que le calculateur (6) est convenablement programmé pour permettre à partir des angles d'arrivée sur les radiogoniomètres des ondes électromagnétiques émises par les balises de déterminer la localisation des balises à l'intérieur de zones d'un territoire déterminé.

16. Système selon l'une quelconque des revendications 1 à 15 caractérisé en ce que l'émetteur (16) de la balise est relié à au moins deux antennes réparties de part et d'autre du véhicule.

## Patentansprüche

1. Automatisches System zur Lokalisierung und Identifizierung von in Not geratenen Fahrzeugen, mit einem Netz von Funkgoniometern (4₁ ... 4ₙ), die an genau bestimmten Stellen von Gebietszonen angeordnet sind, mit einer Gruppe von Notfunkgeräten (2), die in sich in den Gebietszonen bewegenden Fahrzeugen eingebaut sind, und mit einem Rechner (6), der an die Funkgoniometer des Netzes über Datenverbindungen gekoppelt ist, um ausgehend von von den Funkgoniometern gelieferten Informationen bezüglich der Erfassung der Funkwellen die Lage der sendenden Funkgeräte in dem Gebiet zu bestimmen, dadurch gekennzeichnet, daß das System an den Rechner (6) gekoppelte Verbindungsmittel (8) aufweist, um den dem Ort der sendenden Funkgeräte am nächsten liegenden Rettungsdiensten die für eine schnelle Hilfe erforderlichen Informationen zu übermitteln, und daß der Rechner (6) eine Umwandlungstabelle (22) besitzt, um ausgehend von geographischen Koordinaten des Orts eines Funkgeräts die geographische Zone zu bestimmen, in der das Funkgerät liegt, die Adresse und die Telefonnummern der nächstliegenden Rettungsleitstelle sowie die nächstliegende Ortschaft und die Straße zu identifizieren, auf der sich das in Not geratene Fahrzeug befindet.

2. System nach Anspruch 1, dadurch gekennzeichnet, daß die Funkgoniometer (4₁ ... 4ₙ) die von den Funkgeräten übermittelten Nachrichten und die Winkel erfassen, unter denen die diese Nachrichten übertragenden Wellen ankommen, um sie an den Rechner (6) weiterzuleiten.

3. System nach einem beliebigen der Ansprüche 1 und 2, dadurch gekennzeichnet, daß jedes Notfunkgerät (2) mindestens eine Stoßmeßsonde (14) aufweist, die an einen Funksender (16) gekoppelt ist.

4. System nach Anspruch 3, dadurch gekennzeichnet, daß der Sender (16) auf mindestens zwei unterschiedlichen Frequenzen sendet.

5. System nach einem beliebigen der Ansprüche 3 und 4, dadurch gekennzeichnet, daß der Sender (16) von einem Mikroprozessor (11) gesteuert wird, der an die Stoßmeßsonden (15) gekoppelt ist.

6. System nach Anspruch 5, dadurch gekennzeichnet, daß der Sender (16) unter Steuerung durch den Mikroprozessor (11) Nachrichten aussendet, die die Identifizierung des in Not geratenen Fahrzeugs und ggf. der Art des Unfalls erlauben.

7. System nach Anspruch 6, dadurch gekennzeichnet, daß der Sender und/oder der Mikroprozessor von einer Pufferbatterie (15) gespeist werden, die an die Fahrzeugbatterie (21) angeschlossen ist.

8. System nach Anspruch 7, dadurch gekennzeichnet, daß der Mikroprozessor (11) an das Armaturenbrett des Fahrzeugs angeschlossen ist, um durch eine Auslösung geeignete neue Nachrichten bezüglich der Art der gewünschten Rettungsmaßnahmen zu erlauben.

9. System nach Anspruch 8, dadurch gekennzeichnet, daß das Funkgerät einen Unterbrecher aufweist, um die Stromversorgung des Senders (16) und/oder des Mikroprozessors (11) zu unterbrechen.

10. System nach einem beliebigen der Ansprüche 5 bis 9, dadurch gekennzeichnet, daß der Mikroprozessor (11) so programmiert ist, daß er die Aussendung von Frequenzen und/oder Notfallnachrichten durch den Sender (16) auslöst, wenn ein Stoß von der Stoßmeßsonde (14) erfaßt worden ist.

11. System nach Anspruch 10, dadurch gekennzeichnet, daß die Programmierung des Mikroprozessors so gestaltet ist, daß die Aussendung der Notrufnachrichten während einer vorbestimmten Dauer verzögert wird, nachdem ein Stoß erfolgt ist, um den Fahrzeuginsassen während dieser Dauer die Möglichkeit zu geben, die Aussendung der Notrufnachrichten zu verhindern, wenn dies nicht gerechtfertigt ist.

12. System nach Anspruch 11, dadurch gekennzeichnet, daß der Mikroprozessor (11) so programmiert ist, daß er die regelmäßige Aussendung von Nachrichten nach Ablauf der vorbestimmten Dauer ermöglicht, wenn diese Aussendung durch eine Fahrzeuginsassen nicht verhindert worden ist.

13. System nach Anspruch 12, dadurch gekennzeichnet, daß die Aussendung der Nachrichten in Zeitintervallen stattfindet, die zufällig innerhalb von Zeitfenstern einer festen Dauer bestimmt werden.

14. System nach den Ansprüchen 11, 12 und 13, dadurch gekennzeichnet, daß die Aussendung durch Einwirkung auf ein Organ am Armaturenbrett oder auf den Speisestromschalter des Funkgeräts verhindert wird.

15. System nach einem beliebigen der Ansprüche 1 bis 14, dadurch gekennzeichnet, daß der Rechner (6) geeignet programmiert ist, um aufgrund der Winkel, unter denen die von den Funkgeräten ausgesendeten elektromagnetischen Wellen an den Funkgoniometern ankommen, die Lokalisierung der Funkgeräte innerhalb von Zonen eines bestimmten Gebiets zu bestimmen.

16. System nach einem beliebigen der Ansprüche 1 bis 15, dadurch gekennzeichnet, daß der Sender (16) des Funkgeräts an mindestens zwei Antennen angeschlossen ist, die sich zu beiden Seiten des Fahrzeugs befinden.

## Claims

1. Automatic system for locating and identifying vehicles in distress, comprising, on the one hand, a network of radiogoniometers (4₁...4ₙ) which are arranged at well determined locations of areas of a region, on the other hand, a set of radio distress beacons (2) which are arranged inside vehicles (1) moving within the areas of the region, and a computer (6) coupled to the radiogoniometers of the network by computer links in order, on the one hand, to determine, on the basis of information picked up from the radio waves supplied by the radiogoniometers, the position in the region of the emitting beacons, characterised in that it comprises means of connection (8) coupled to the computer (6) for relaying to the emergency services closest to the place of the emitting beacons the information necessary for expediting the rescue, and in that the computer (6) includes a conversion table (22) for determining, on the basis of geographical coordinates of the location of a beacon, the geographical area in which the beacon is situated, identifying the address and telephone numbers of the closest emergency services, and also the closest locality and the road on which the vehicle in distress is situated.

2. System according to Claim 1, characterised in that the radiogoniometers (4₁...4ₙ) detect the messages transmitted by the beacons and the angles of arrival of the waves transmitting these messages in order to retransmit them to the computer (6).

3. System according to either one of Claims 1 and 2, characterised in that each radio distress beacon (2) comprises at least one impact sensor (14) coupled to a radio emitter (16).

4. System according to Claim 3, characterised in that the emitter (16) emits on at least two different frequencies.

5. System according to either one of Claims 3 and 4, characterised in that the emitter (16) is controlled by a microprocessor (11) coupled to the impact sensors (14).

6. System according to Claim 5, characterised in that the emitter (16) emits under the control of the microprocessor (11) messages enabling the vehicle involved in an accident and possibly the nature of the accident to be identified.

7. System according to Claim 6, characterised in that the emitter and/or the microprocessor are powered by a booster battery (15) connected up to the vehicle battery (21).

8. System according to Claim 7, characterised in that the microprocessor (11) is connected to the vehicle dashboard to permit the sending through a triggering of new messages appropriate to the nature of the emergency services requested.

9. System according to Claim 8, characterised in that the beacon includes a switch for cutting electrical power to the emitter (1) and/or to the microprocessors (11).

10. System according to any one of Claims 5 to 9, characterised in that the microprocessor (11) is programmed to trigger the emission of frequencies and/or of distress messages by the emitter (16) when an impact is detected by the impact sensor (14).

11. System according to Claim 10, characterised in that the programming of the microprocessor is carried out in such a way as to permit, when an impact occurs, deferral of the sending of the distress messages for a specified duration in order to enable the passengers of the vehicle to prevent the sending of the messages for this duration if this sending is not justified.

12. System according to Claim 11, characterised in that the microprocessor (11) is programmed to permit the regular sending of messages on expiry of the specified duration if this sending has not been prevented by a passenger of the vehicle.

13. System according to Claim 12, characterised in that the emission of the messages takes place through emission slot selected randomly inside time windows of specified duration.

14. System according to Claims 11, 12 and 13, characterised in that the prevention of emission takes place through action on the dashboard or on the power switch of the beacon.

15. System according to any one of Claims 1 to 14, characterised in that the computer (6) is suitably programmed to permit, on the basis of the angles of arrival at the radiogoniometers of the electromagnetic waves emitted by the beacons, determination of the location of the beacons inside areas of a specified region.

16. System according to any one of Claims 1 to 15, characterised in that the emitter (16) of the beacon is connected to at least two antennas spread out on either side of the vehicle.
